# EUROPÄISCHE PATENTSCHRIFT

(11) **EP 1 556 433 B1**
(45) Veröffentlichungstag und Bekanntmachung des Hinweises auf die Patenterteilung: **07.06.2006**
(21) Anmeldenummer: 03750711.8
(22) Anmeldetag: 14.10.2003
(51) Int. Cl.: C08G 63/20, C08G 63/12

(54) **POLYESTER, INSBESONDERE ALS WEICHMACHER FÜR KUNSTSTOFFE**
POLYESTERS, ESPECIALLY USED AS PLASTICIZERS FOR PLASTICS
POLYESTERS UTILISES NOTAMMENT COMME PLASTIFIANTS DE MATIERES PLASTIQUES

(30) Priorität: 18.10.2002 DE 10248878
(43) Veröffentlichungstag der Anmeldung: 27.07.2005
(73) Patentinhaber: BASF Aktiengesellschaft, 67056 Ludwigshafen (DE)
(72) Erfinder: TISCHER, Gerlinde, 01945 Ruhland (DE); BRAND, Johann Diedrich, 49448 Lemförde (DE); HACKL, Christa, 49152 Bad Essen (DE)
(86) Internationale Anmeldenummer: PCT/EP2003/011327
(87) Internationale Veröffentlichungsnummer: WO 2004/037891

(56) Entgegenhaltungen:
- WO-A-02/50158
- DE-A- 10 141 250
- GB-A- 1 305 175
- US-A- 3 331 802
- US-A- 3 972 962
- PATENT ABSTRACTS OF JAPAN Bd. 0165, Nr. 01 (C-0996), 16. Oktober 1992 (1992-10-16) & JP 4 185634 A (DAINIPPON INK & CHEM INC), 2. Juli 1992 (1992-07-02)
- PATENT ABSTRACTS OF JAPAN Bd. 0174, Nr. 78 (C-1104), 31. August 1993 (1993-08-31) & JP 5 117528 A (DAINIPPON INK & CHEM INC), 14. Mai 1993 (1993-05-14)

## Beschreibung

Die Erfindung bezieht sich auf Polyester auf der Basis von mindestens einer Dicarbonsäure, Benzoesäure und mindestens einem Tri- und/oder bevorzugt Diol und Verfahren zur Herstellung dieser Polyester. Des weiteren bezieht sich die Erfindung auf Kunststoffe, bevorzugt thermoplastische Kunststoffe, besonders bevorzugt thermoplastisches Polyurethan und/oder Polyvinylchlorid, insbesondere thermoplastisches Polyurethan enthaltend die erfindungsgemäßen Polyester.

Polyester als Weichmacher für Kunststoffe sind bekannt. Vorzugsweise durch ihr Löse- oder Quellvermögen treten die Weichmacher mit hochmolekularen Produkten in physikalische Wechselwirkung, beispielsweise die polaren Gruppen des eher niedrigmolekularen Weichmachers mit den langkettigen, regelmäßig angeordneten polaren Gruppen des hochmolekularen Kunststoffes. Die beweglicheren Weichmacherdipole ordnen sich gleichmäßig zwischen den Dipolen des Kunststoffes an, wodurch eine höhere Weichheit und Dehnung des Kunststoffe erzielt wird. Zudem wird der thermoplastische Bereich zu niedrigeren Temperaturen verschoben, d.h. eine bessere Kälteelastizität wird erzielt.

Ziel der vorliegenden Erfindung war es, Weichmacher für Kunststoffe, insbesondere thermoplastische Polyurethane zu entwickeln, die mit den Polymeren ein homogenes System bilden und inert sind. Weitere Forderungen an Weichmacher waren eine geringe Flüchtigkeit, gute Verträglichkeit, gute Licht-, Kälte- und Wärmebeständigkeit, niedrige Hygroskopie und hohe Wasserbeständigkeit sowie Farb- und Geruchlosigkeit.

Diese Aufgabe konnte durch die eingangs beschriebenen Polyester, die in Kunststoffen, insbesondere thermoplastischen Polyurethanen als Weichmacher wirken, gelöst werden.

Überraschenderweise wurde gefunden, dass eine niedermolekulare, monofunktionelle Säure wie Benzoesäure gut geeignet ist, die geforderten Eigenschaften, wie Verträglichkeit im thermoplastischen Polyurethan, Hydrolysestabilität und langanhaltende Weichmacherwirkung zu bewirken. Dies war um so überraschender, da durch Umesterung mit der niedermolekularen Säure ein Gemisch aus hauptsächlich kurzkettigen Esterstrukturen erwartet wurde und mit diesem überraschenderweise eine gute Weichmacherverträglichkeit erreicht wurde.

Da die Carboxylgruppe eine hohe Polarität besitzt sind die erfindungsgemäßen Dicarbonsäureester als Weichmacher gut geeignet. Aufgrund des bevorzugten Molekulargewichtsbereiches wird eine Migration des Weichmachers aus dem Kunststoff vermieden. Auch eine Diffusion in die Umgebung, beispielsweise in einen anderen Kunststoff wird somit verhindert und Quellerscheinungen oder ein Verkleben der beiden sich berührenden Stoffe wird verhindert. Insbesondere Adipinsäureester als Dicarbonsäureester besitzen eine hohe Kälteflexibilität und eine niedrige Migrationsneigung. Die Elastizität bleibt über einen langen Zeitraum erhalten, da die Adipate aus dem Kunststoff kaum oder gar nicht migrieren. Die erfindungsgemäßen Polyester weisen bevorzugt keine freien Hydroxylgruppen, besonders bevorzugt weder freie Hydroxylgruppen noch freie Säuregruppen auf, sie besitzen somit bevorzugt eine Funktionalität von 0 gegenüber Isocyanaten. Damit wird wie gewünscht ein chemischer Einbau des Weichmachers in das Polyurethan vermieden und eine Verschlechterung der mechanischen Eigenschaften des Kunststoffes verhindert.

Der erfindungsgemäße Polyester beinhaltet neben der endständigen Benzoesäure als Säurekomponente mindestens eine Dicarbonsäure. Als Dicarbonsäuren können allgemein bekannte aliphatische, aromatische und/oder araliphatische Dicarbonsäuren eingesetzt werden, bevorzugt Bernsteinsäure, Glutarsäure, Adipinsäure, Korksäure, Azelainsäure, Dekandicarbonsäure, Maleinsäure, Fumarsäure, Phthalsäure, Isophthalsäure und/oder Terephthalsäure und Gemische dieser Dicarbonsäuren untereinander, besonders bevorzugt Adipinsäure, Bernsteinsäure, Glutarsäure und/oder Ethylhexansäure, insbesondere Adipinsäure. Zur Veresterung können die Säuren natürlich auch als Säurederivate eingesetzt werden, beispielsweise als Säureanhydride oder Säurehalogenide, z.B. Säurechloride.

Als Alkoholkomponente, die in dem Polyester verestert mit der Benzoesäure sowie der oder den Dicarbonsäuren vorliegt, kommen allgemein bekannte Diole und/oder Triole, bevorzugt Diole, beispielsweise geradkettige oder verzweigte Alkandiole, Alkendiole, Polyetherdiol und/oder Triole und/oder Polyesterdiole und Gemische dieser Alkohole untereinander in Betracht. Bevorzugt basiert der erfindungsgemäße Polyester auf Ethan-1,2-diol, Diethylenglykol, Propan-1,2-diol, Propan-1,3-diol, Dipropylenglykol, Butan-1,4-diol, Pentan-1,5-diol und/oder Hexan-1,6-diol als Diol.

Die erfindungsgemäßen Polyester weisen bevorzugt ein Molekulargewicht von 500 g/mol bis 1500 g/mol, besonders bevorzugt 600 g/mol bis 1200 g/mol, insbesondere 600 g/mol bis 1000 g/mol auf, wobei das Molekulargewicht das zahlenmittlere Molekulargewicht ist. Bei Gemischen verschiedener Polyester stellt dieses Molekulargewicht das mittlere Molekulargewicht dar.

In dem Polyester beträgt das molare Verhältnis von Dicarbonsäure zu Benzoesäure bevorzugt 0,1 : 1 bis 10 : 1, besonders bevorzugt 0,5 : 1 bis 5 : 1, insbesondere 1 : 1 bis 2 : 1.
Der erfindungsgemäße Polyester weist bevorzugt eine Hydroxylzahl von 0 bis 25 mg KOH/g, besonders bevorzugt 0 bis 12 mg KOH/g auf. Die Säurezahl des Polyestern beträgt bevorzugt 0 bis 10 mg KOH/g, besonders bevorzugt 0 bis 6 mg KOH/g. Die Viskosität bei 25°C der erfindungsgemäßen Polyester beträgt bevorzugt 50 mPas bis 5000 mPas. Der Wassergehalt der erfindungsgemäßen Polyester beträgt bevorzugt 0 bis 0,02 Gew.-%, bezogen auf das Gesamtgewicht des Polyesters.

Bevorzugt sind Polyester, die die folgenden Struktureinheiten in der angegebenen Folge aufweisen:

Benzoesäure-[(Diethylenglykol oder Ethandiol-1,2)-(Adipinsäure oder Bernsteinsäure)]n-(Diethylenglykol oder Ethan-diol-1,2)-Benzoesäure,
wobei n den Wert 1, 2, 3, 4 oder 5 annimmt. Dabei sind die genannten Säuren mit den Alkoholkomponenten über Esterstrukturen verbunden.

Besonders bevorzugt sind Polyester, die folgende Struktur aufweisen:
H₅C₆-CO-O-(CH₂) ₂-O-(CH₂) ₂-[O-CO-(CH₂) ₄-CO-O-(CH₂) ₂-O-(CH₂)₂]ₙ-O-CO-C₆H₅
wobei n den Wert 1, 2, 3, 4 oder 5, bevorzugt 2 oder 3 annimmt, d.h. Polyester auf der Basis von Benzoesäure, Diethylenglykol und Adipinsäure.

Die Herstellung der erfindungsgemäßen Polyester kann mittels allgemein bekannter und vielfältig beschriebener Verfahren zur Veresterung von Alkoholen mit Carbonsäuren erfolgen, beispielsweise indem man in mindestens einer Stufe mindestens eine Dicarbonsäure und/oder Dicarbonsäurederivat und Benzoesäure und/oder Benzoesäurederivat mit mindestens einem Diol und/oder Triol gegebenenfalls in Gegenwart von Katalysatoren verestert. Als Katalysatoren für die Veresterung können beispielsweise bis zu 100 ppm üblicher Veresterungskatalysatoren z.B. metallorganische Verbindungen wie n-Butyltitanat, Zinn-II-isooctoat, Zinndilaurat eingesetzt werden. Die Herstellung der Polyester durch Polykondensationsreaktion kann in üblichen Reaktoren, beispielsweise Rührkessel, bei Temperaturen von üblicherweise 150°C bis 250°C unter Normaldruck und/oder eventuell Vakuum, bevorzugt bei einem Druck von 700 bis 1 mbar erfolgen. Die Veresterung kann in einem Schritt erfolgen, indem man Benzoesäure, Dicarbonsäure und Alkohol vorlegt und in einem Schritt verestert. Alternativ ist es möglich, das Diol und/oder Triol in einem ersten Schritt mit der Dicarbonsäure zu verestern, wobei das molare Verhältnis von Dicarbonsäure zu Diol bevorzugt 0,4 : 1 bis 1 : 1 beträgt, bevorzugt bis eine Hydroxylzahl von kleiner 250 mg KOH/g erreicht ist, und anschließend den Polyester der ersten Stufe mit Benzoesäure umzusetzen. Dabei wird die Benzoesäure sowohl mit freien Hydroxylgruppen des Diols/Triols kondensieren als auch bereits mit der oder den Dicarbonsäuren gebildete Ester umestern.

Üblicherweise liegen die erfindungsgemäß hergestellten Polyester somit in einem Gemisch unterschiedlicher Oligomerer gleicher Ausgangsstoffe, d.h. Dicarbonsäure, Benzoesäure und Diol/Triol vor. Dabei weist das Gemisch die eingangs dargestellten bevorzugten physikalischen Eigenschaften auf.

Die erfindungsgemäßen Polyester können in allen bekannten Kunststoffen, insbesondere thermoplastischen Kunststoffen, beispielsweise Acrylsäure-Butadien-Styrol-Copolymeren (ABS), ASA, SAN, Polyethylen, Polypropylen, EPM, EPDM, PVC, Acrylatkautschuk, Polyester, Polyoxymethylen (POM) , Polyamid (PA), PC (Polycarbonat) und/oder thermoplastischen Polyurethanen, in dieser Schrift auch als TPU bezeichnet, als Weichmacher eingesetzt werden. Auch bei Mischungen dieser Kunststoffe können die erfindungsgemäßen Polyester als Weichmacher eingesetzt werden. Bevorzugt werden die erfindungsgemäßen Weichmacher in allen polaren Kunststoffen, beispielsweise polaren thermoplastischen Kunststoffen, eingesetzt werden, z.B. Polyesterester, Polyetherether, Polycarbonat, Polysulfon. Entsprechende Kunststoffe sind beispielsweise unter den Marken Elastotec®, Arnitel® oder Hytrel® erhältlich. Besonders bevorzugt sind thermoplastische Polyurethane oder Mischungen von thermoplastischen Kunststoffen enthaltend thermoplastisches Polyurethan und die erfindungsgemäßen Polyester als Weichmacher.

Dabei enthalten die Kunststoffe den oder die erfindungsgemäßen Polyester bevorzugt in einer Menge von 0,2 bis 45 Gew.-%, besonders bevorzugt 0,2 bis 30 Gew.-%, jeweils bezogen auf das Gesamtgewicht des Kunststoffes mit dem Polyester.

Das thermoplastische Polyurethan enthaltend den oder die erfindungsgemäßen Polyester weist bevorzugt eine Shore-Härte von 40 A bis 95 A, besonders bevorzugt Shore-60-A bis Shore-75-A auf.

Vorteile bei der Verwendung der erfindungsgemäßen Weichmacher ist der gute Abrieb mit weniger als 60 mm3, je nach zugesetzter Menge, gutes Fließen bei der thermoplastischen Verarbeitung für TPU mit Shorehärten unterhalb von 75/70 Shore A.

Verfahren zur Einbringung/Einarbeitung von Weichmachern, auch Polyestern als Weichmacher, in die jeweiligen Kunststoffe sind für die einzelnen Kunststoffe allgemein bekannt und vielfältig beschrieben. Beispielsweise können die erfindungsgemäßen Polyester den geschmolzenen thermoplastischen Kunststoffen beispielsweise mittels eines Extruders zugeführt oder auch den Ausgangsstoffen zur Herstellung der Kunststoffe zugegeben werden, beispielsweise den gegenüber Isocyanaten reaktiven Verbindungen (b) vor oder bei der Herstellung der TPU als auch dem fertigen TPU, beispielsweise dem geschmolzenen oder erweichtem TPU.

Verfahren zur Herstellung von TPU sind allgemein bekannt. Beispielsweise können die thermoplastischen Polyurethane durch Umsetzung von (a) Isocyanaten mit (b) gegenüber Isocyanaten reaktiven Verbindungen mit einem Molekulargewicht von 500 bis 10000 und gegebenenfalls (c) Kettenverlängerungsmitteln mit einem Molekulargewicht von 50 bis 499 gegebenenfalls in Gegenwart von (d) Katalysatoren und/oder (e) üblichen Hilfsstoffen herstellt werden.

Im Folgenden sollen beispielhaft die Ausgangskomponenten und Verfahren zur Herstellung der bevorzugten TPU dargestellt werden.

Die bei der Herstellung der TPU üblicherweise verwendeten Komponenten (a), (b) sowie gegebenenfalls (c), (d) und/oder (e) sollen im Folgenden beispielhaft beschrieben werden:
a) Als organische Isocyanate (a) können allgemein bekannte aliphatische, cycloaliphatische, araliphatische und/oder aromatische Isocyanate eingesetzt werden, beispielsweise Tri-, Tetra-, Penta-, Hexa-, Hepta- und/oder Oktamethylendiisocyanat, 2-Methyl-pentamethylen-diisocyanat-1,5, 2-Ethylbutylen-diisocyanat-1,4, Pentamethylen-diisocyanat-1,5, Butylen-diisocyanat-1,4, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexan-diisocyanat, 1-Methyl-2,4- und/oder -2,6-cyclohexan-diisocyanat und/oder 4,4'-, 2,4'- und 2,2'-Dicyclohexylmethan-diisocyanat, 2,2`-, 2,4'- und/oder 4,4'-Diphenylmethandiisocyanat (MDI), 1,5-Naphthylendiisocyanat (NDI), 2,4- und/oder 2,6-Toluylendiisocyanat (TDI), Diphenylmethandiisocyanat, 3,3' -Dimethyl-diphenyl-diisocyanat, 1,2-Diphenylethandiisocyanat und/oder Phenylendiisocyanat.
b) Als gegenüber Isocyanaten reaktive Verbindungen (b) können die allgemein bekannten gegenüber Isocyanaten reaktiven Verbindungen eingesetzt werden, beispielsweise Polyesterole, Polyetherole und/oder Polycarbonatdiole, die üblicherweise auch unter dem Begriff "Polyole" zusammengefaßt werden, mit Molekulargewichten von 500 bis 8000, bevorzugt 600 bis 6000, insbesondere 800 bis 4000, und bevorzugt einer mittleren Funktionalität von 1,8 bis 2,3, bevorzugt 1,9 bis 2,2, insbesondere 2.
c) Als Kettenverlängerungsmittel (c) können allgemein bekannte aliphatische, araliphatische, aromatische und/oder cycloaliphatische Verbindungen mit einem Molekulargewicht von 50 bis 499, bevorzugt 2-funktionelle Verbindungen, eingesetzt werden, beispielsweise Diamine und/oder Alkandiole mit 2 bis 10 C-Atomen im Alkylenrest, insbesondere Butandiol-1,4, Hexandiol-1,6 und/oder Di-, Tri-, Tetra-, Penta-, Hexa-, Hepta-, Okta-, Nona- und/oder Dekaalkylenglykole mit 3 bis 8 Kohlenstoffatomen.
d) Geeignete Katalysatoren, welche insbesondere die Reaktion zwischen den NCO-Gruppen der Diisocyanate (a) und den Hydroxylgruppen der Aufbaukomponenten (b) und (c) beschleunigen, sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen wie z.B. Eisen-(III)- acetylacetonat, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,0001 bis 0,1 Gew..-Teilen pro 100 Gew.-Teile Polyhydroxylverbindung (b) eingesetzt.
e) Neben Katalysatoren (d) können den Aufbaukomponenten (a) bis (c) auch übliche Hilfsstoffe (e) hinzugefügt werden. Genannt seien beispielsweise oberflächenaktive Substanzen, Kettenregler, Füllstoffe, Flammschutzmittel, Keimbildungsmittel, Oxidationsstabilisatoren, Gleit- und Entformungshilfen, Farbstoffe und Pigmente, Stabilisatoren, z.B. gegen Hydrolyse, Licht, Hitze oder Verfärbung, anorganische und/oder organische Füllstoffe, Verstärkungsmittel und Weichmacher.

Nähere Angaben über die oben genannten Hilfsmittel- und Zusatzstoffe sind der Fachliteratur zu entnehmen.

Alle in dieser Schrift genannten Molekulargewichte weisen die Einheit [g/mol] auf.

Zur Einstellung von Härte der TPU können die Aufbaukomponenten (b) und (c) in relativ breiten molaren Verhältnissen variiert werden. Bewährt haben sich molare Verhältnisse von Komponente (b) zu insgesamt einzusetzenden Kettenverlängerungsmitteln (c) von 10 : 1 bis 1 : 10, insbesondere von 1 : 1 bis 1 : 4, wobei die Härte der TPU mit zunehmendem Gehalt an (c) ansteigt.

Bevorzugt werden zur Herstellung der TPU auch Kettenverlängerer (c) verwendet.

Die Umsetzung kann bei üblichen Kennzahlen erfolgen, bevorzugt bei einer Kennzahl von 60 bis 120, besonders bevorzugt bei einer Kennzahl von 80 bis 110. Die Kennzahl ist definiert durch das Verhältnis der insgesamt bei der Umsetzung eingesetzten Isocyanatgruppen der Komponente (a) zu den gegenüber Isocyanaten reaktiven Gruppen, d.h. den aktiven Wasserstoffen, der Komponenten (b) und (c). Bei einer Kennzahl von 100 kommt auf eine Isocyanatgruppe der Komponente (a) ein aktives Wasserstoffatom, d.h. eine gegenüber Isocyanaten reaktive Funktion, der Komponenten (b) und (c). Bei Kennzahlen über 100 liegen mehr Isocyanatgruppen als OH-Gruppen vor.

Die Herstellung der TPU kann nach den bekannten Verfahren kontinuierlich, beispielsweise mit Reaktionsextrudern oder dem Bandverfahren nach one-shot oder dem Prepolymerverfahren, oder diskontinuierlich nach dem bekannten Prepolymerprozess erfolgen. Bei diesen Verfahren können die zur Reaktion kommenden Komponenten (a), (b) und gegebenenfalls (c), (d) und/oder (e) nacheinander oder gleichzeitig miteinander vermischt werden, wobei die Reaktion unmittelbar einsetzt. Beim Extruderverfahren werden die Aufbaukomponenten (a), (b) sowie gegebenenfalls (c), (d) und/oder (e) einzeln oder als Gemisch in den Extruder eingeführt, z.B. bei Temperaturen von 100 bis 280°C, vorzugsweise 140 bis 250°C zur Reaktion gebracht, das erhaltene TPU wird extrudiert, abgekühlt und granuliert. Die Verarbeitung der erfindungsgemäß hergestellten TPU, die üblicherweise als Granulat oder in Pulverform vorliegen, zu den gewünschten Folien, Formteilen, Rollen, Fasern, Verkleidungen in Automobilen, Schläuchen, Kabelsteckern, Faltenbälgen, Schleppkabeln, Kabelummantelungen, Dichtungen, Riemen oder Dämpfungselementen erfolgt nach üblichen Verfahren, wie z.B. Spritzguss oder Extrusion.

Die erfindungsgemäßen Vorteile sollen anhand der folgenden Beispiele dargestellt werden.

### Beispiel 1

In einer 1 Liter Laborrührapparatur mit Temperaturmesseinrichtung, Stickstoffeinperlung, Kolonne und Destillationsaufsatz wurden 292,28 g Adipinsäure mit 318,36 g Diethylenglykol und 244,24 g Benzoesäure bei 130°C aufgeschmolzen und innig vermischt. Nach Temperaturerhöhung auf 220°C wurden unter Normaldruck insgesamt 105 g Reaktionswasser abgetrennt. Der Reaktionsfortschritt wurde anhand der Säurezahl verfolgt. Bei einer Säurezahl von ca. 15 mg KOH/g wurde die Synthese mit 10 ppm n-Butyltitanat katalysiert. Nach Erreichen einer Säurezahl < 6 mg KOH/g wurde die Reaktion beendet und das Veresterungsprodukt abgefüllt. Es wies die folgenden Kennwerte auf:

| | | |
|---|---|---|
| Säurezahl | mg KOH/g | = 5,2 |
| Hydroxylzahl | mg KOH/g | = 11,2 |
| Wassergehalt | % | = 0,015 |
| Viskosität bei 25°C | mPas | = 1061 |

### Beispiel 2

59 Gewichtsteile Polymerdiol auf Basis 1,4-Butandiol und/oder 1,2-Ethylenglycol und Adipinsäure mit einem zahlenmittleren Molekulargewicht von ca. 2000 g/mol wurden mit 4,7 Gewichtsteilen 1,4-Butandiol und 21 Gewichtsteilen 4,4'-Diphenylmethylendiisocyanat sowie verschiedenen Zusätzen, wie Hydrolyseschutzmittel, Stabilisatoren, Gleitmittel in einem Reaktionsextruder umgesetzt wobei vor der Granulierung 15 Gewichtsteile der erfindungsgemäßen Weichmacher zugefahren wurden. Das daraus hergestellte TPU hatte eine Shore-Härte von ca. 70 A und lies sich z.B. über Extruder zu Profilen und Schläuche, sowie im Spritzguss zu Schuhsohlen und anderen Formteilen verarbeiten.

### Beispiel 3

In 80 Gewichtsteile TPU mit einer Shore-Härte von ca. 80 A wurden auf einem Zweiwellenextruder 20 Gewichtsteile des erfindungsgemäßen Weichmachers eingearbeitet. Aus dem so zubereiteten TPU werden in einer Spritzgußmaschine Formteile hergestellt, die ein Shore-Härte von 70 Shore A aufwiesen.

## Patentansprüche

1. Thermoplastisches Polyurethan enthaltend Polyester auf der Basis von mindestens einer Dicarbonsäure, Benzoesäure und mindestens einem Di- und/oder Triol.

2. Thermoplastisches Polyurethan gemäß Anspruch 1, **dadurch gekennzeichnet, dass** der Polyester auf Bernsteinsäure, Glutarsäure, Adipinsäure, Korksäure, Azelainsäure, Dekandicarbonsäure, Maleinsäure, Fumarsäure, Phthalsäure, Isophthalsäure und/oder Terephthalsäure als Dicarbonsäurekomponente basiert.

3. Thermoplastisches Polyurethan gemäß Anspruch 1, **dadurch gekennzeichnet, dass** der Polyester auf Ethan-1,2-diol, Diethylenglykol, Propan-1,2-diol, Propan-1,3-diol, Dipropylenglykol, Butan-1,4-diol, Pentan-1,5-diol und/oder Hexan-1,6-diol als Diol basiert.

4. Thermoplastisches Polyurethan gemäß Anspruch 1, **dadurch gekennzeichnet, dass** das Molekulargewicht des Polyesters 500 g/mol bis 1500 g/mol beträgt.

5. Thermoplastisches Polyurethan gemäß Anspruch 1, **dadurch gekennzeichnet, dass** das molare Verhältnis von Dicarbonsäure zu Benzoesäure in dem Polyester 0,1 : 1 bis 10 : 1 beträgt.

6. Thermoplastisches Polyurethan gemäß Anspruch 1, **dadurch gekennzeichnet, dass** der Polyester eine Hydroxylzahl von 0 bis 25 mg KOH/g aufweist.

7. Thermoplastisches Polyurethan gemäß Anspruch 1, **dadurch gekennzeichnet, dass** der Polyester eine Säurezahl von 0 bis 10 mg KOH/g aufweist.

8. Thermoplastisches Polyurethan gemäß Anspruch 1, **dadurch gekennzeichnet, dass** der Polyester die folgende Struktur aufweist:
H₅C₆-CO-O-(CH₂)₂-O-(CH₂)₂- [O-CO-(CH₂)₄-CO-O-(CH₂)₂-O-(CH₂)₂]ₙ-O-CO-C₆H₅
wobei n den Wert 1, 2, 3, 4 oder 5 annimmt.

9. Thermoplastisches Polyurethan gemäß Anspruch 1, **dadurch gekennzeichnet, dass** die Kunststoffe den Polyester in einer Menge von 0,2 bis 45 Gew.-%, bezogen auf das Gesamtgewicht des Kunststoffes mit dem Polyester, enthalten.

10. Thermoplastisches Polyurethan gemäß einem der Ansprüche 1 bis 8, **dadurch gekennzeichnet, dass** das thermoplastische Polyurethan enthaltend den Polyester eine Shore-Härte von 40 bis 95 A aufweist.

## Claims

1. A thermoplastic polyurethane comprising a polyester based on at least one dicarboxylic acid, benzoic acid, and at least one di- and/or triol.

2. The thermoplastic polyurethane according to claim 1, wherein the polyester is based on succinic acid, glutaric acid, adipic acid, suberic acid, azelaic acid, decanedicarboxylic acid, maleic acid, fumaric acid, phthalic acid, isophthalic acid, and/or terephthalic acid as dicarboxylic acid component.

3. The thermoplastic polyurethane according to claim 1, wherein the polyester is based on ethane-1,2-diol, diethylene glycol, propane-1,2-diol, propane-1,3-diol, dipropylene glycol, butane-1,4-diol, pentane-1,5-diol, and/or hexane-1,6-diol as diol.

4. The thermoplastic polyurethane according to claim 1, wherein the molar mass of the polyester is from 500 to 1500 g/mol.

5. The thermoplastic polyurethane according to claim 1, in which the molar ratio of dicarboxylic acid to benzoic acid is from 0.1 : 1 to 10 : 1.

6. The thermoplastic polyurethane according to claim 1, wherein the hydroxy value of the polyester is from 0 to 25 mg KOH/g.

7. The thermoplastic polyurethane according to claim 1, wherein the acid value of the polyester is from 0 to 10 mg KOH/g.

8. The thermoplastic polyurethane according to claim 1, wherein the polyester has the following structure:
H₅C₆-CO-O-(CH₂)₂-O-(CH₂)₂-[O-CO-(CH₂)₄-CO-O-(CH₂)₂-O-(CH₂)₂]ₙ-O-CO-C₆H₅
where n is 1, 2, 3, 4, or 5.

9. The thermoplastic polyurethane according to claim 1, wherein the plastics comprise from 0.2 to 45% by weight of the polyester, based on the total weight of the plastic with the polyester.

10. The thermoplastic polyurethane according to any of claims 1 to 8, wherein the thermoplastic polyurethane comprising the polyester has a Shore hardness of from 40 to 95 A.

## Revendications

1. Polyuréthanne thermoplastique contenant du polyester à base d'au moins un acide dicarboxylique, d'acide benzoïque et d'au moins un di- et/ou triol.

2. Polyuréthanne thermoplastique selon la revendication 1, **caractérisé en ce que** le polyester est à base d'acide succinique, d'acide glutarique, d'acide adipique, d'acide subérique, d'acide azélaïque, d'acide décanedicarboxylique, d'acide maléique, d'acide fumarique, d'acide phtalique, d'acide isophtalique et/ou d'acide téréphtalique comme composant d'acide dicarboxylique.

3. Polyuréthanne thermoplastique selon la revendication 1, **caractérisé en ce que** le polyester est à base d'éthane-1,2-diol, de diéthylèneglycol, de propane-1,2-diol, de propane-1,3-diol, de dipropylèneglycol, de butane-1,4-diol, de pentane-1,5-diol et/ou d'hexane-1,6-diol comme diol.

4. Polyuréthanne thermoplastique selon la revendication 1, **caractérisé en ce que** le poids moléculaire du polyester va de 500 g/mole à 1500 g/mole.

5. Polyuréthanne thermoplastique selon la revendication 1, **caractérisé en ce que** le rapport molaire d'acide dicarboxylique à acide benzoïque dans le polyester est de 0,1:1 à 10:1.

6. Polyuréthanne thermoplastique selon la revendication 1, **caractérisé en ce que** le polyester présente un indice hydroxyle de 0 à 25 mg de KOH/g.

7. Polyuréthanne thermoplastique selon la revendication 1, **caractérisé en ce que** le polyester présente un indice acide de 0 à 10 mg de KOH/g.

8. Polyuréthanne thermoplastique selon la revendication 1, **caractérisé en ce que** le polyester présente la structure suivante:
H₅C₆-CO-O-(CH₂)₂-O-(CH₂)₂-[O-CO-(CH₂)₄-CO-O-(CH₂)₂-O-(CH₂)_{2]n}-O-CO-C₆H₅
dans laquelle n a la valeur 1, 2, 3, 4 ou 5.

9. Polyuréthanne thermoplastique selon la revendication 1, **caractérisé en ce que** les matières plastiques contiennent le polyester dans une quantité de 0,2 à 45% en poids, sur base du poids total de la matière plastique avec le polyester.

10. Polyuréthanne thermoplastique selon l'une quelconque des revendications 1 à 8, **caractérisé en ce que** le polyuréthanne thermoplastique contenant le polyester présente une dureté Shore de 40 à 95 A.
